(19) Europäisches Patentamt
European Patent Office
Office européen des brevets

(11) Veröffentlichungsnummer: **0 435 151 A2**

(12) **EUROPÄISCHE PATENTANMELDUNG**

(21) Anmeldenummer: **90124745.2**

(51) Int. Cl.⁵: **C07B 45/06**

(22) Anmeldetag: **19.12.90**

(30) Priorität: **23.12.89 DE 3942946**

(43) Veröffentlichungstag der Anmeldung:
**03.07.91 Patentblatt 91/27**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Burdinski, Gerhard**
**Johannesweg 2**
**W-5428 Nastätten(DE)**
Erfinder: **Kirsch, Reinhard, Dr.**
**Johannesallee 18**
**W-6230 Frankfurt am Main(DE)**
Erfinder: **Kottmann, Hariolf, Dr.**
**Am Alten Birnbaum 6**
**W-6238 Hofheim am Taunus(DE)**

(54) **Verfahren zur Herstellung von 1,1-disubstituierten Cyclopropanderivaten.**

(57) Beschrieben wird ein Verfahren zum Herstellen einer Verbindung I

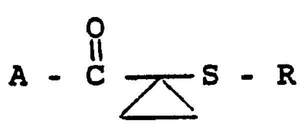

(I)

mit

A = t-Butyl, Aryl und

R = Alkyl, Alkenyl, Alkinyl, Alkeninyl, Cycloalkyl(alkyl) Aryl, Arylalkyl, Alkyl-S-(-O)-aryl

durch Umsetzen einer Verbindung III

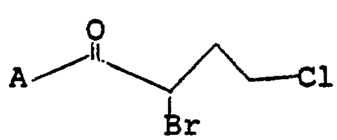

(III)

mit einer Verbindung IV

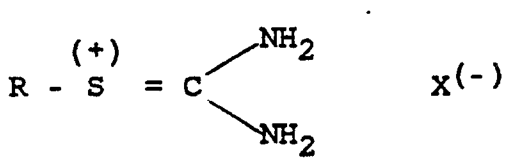

(IV)

unter den Bedingungen einer Phasentransfer-Renktion. Das Verfahren liefert hervorragende Ausbeuten und ist mit keine Geruchsbelästigung durch Mercaptane verbunden.

EP 0 435 151 A2

## VERFAHREN ZUR HERSTELLUNG VON 1,1-DISUBSTITUIERTEN CYCLOPROPANDERIVATEN

Die Erfindung betrifft ein Verfahren zur Darstellung von 1,1-disubstituierten Cyclopropanderivaten, welche einen über ein Schwefel-Atom gebundenen Substituenten am Cyclopropylring aufweisen. Die nach dem erfindungsgemäßen Verfahren synthetisierten Verbindungen sind Vorprodukte für hochwirksame Pharmazeutika, insbesondere Antimykotika sowie Pflanzenschutzmittel, z.B. Fungizide und Wachstumsregulatoren.

In der europäischen Offenlegungsschrift 0 237 917 (Patentanmeldung EP 87103391.6 )werden Verbindungen der Struktur I

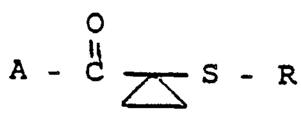

(I)

als Zwischenstufen zur Synthese von Derivaten der Struktur II

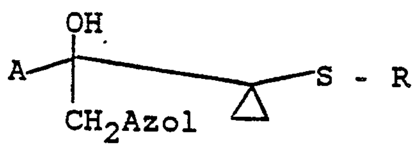

(II)
(Azol = Imidazol, Triazol)

beschrieben, wobei zur Synthese von Derivaten der Formel I entsprechende Mercaptane oder Metallsalze mit einer Verbindung der Formel III

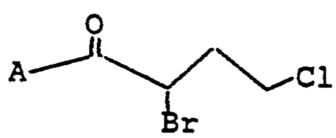

(III)

umgesetzt werden. Substanzen der Struktur II sind potentielle hochpotente Pharmazeutika mit antimykotischer Wirkung und Einsatzmöglichkeiten als Pflanzenschutzmittel und deshalb von großem Interesse.

Die als Ausgangsmaterialien dienenden Verbindungen der Struktur I sind leider aber bisher nur über die Synthese entsprechender Mercaptane, gefolgt von Umsetzung dieser bzw. ihrer Metallsalze mit Verbindungen der Struktur III darstellbar. Es bestand daher ein Bedürfnis, einen wesentlich einfacheren Zugang zu I erhalten.

Es wurde nun überraschenderweise gefunden, daß die Verbindungen der Formel I, welche in der oben genannten Patentanmeldung als Vorprodukte beansprucht werden, auf einfache Weise direkt aus einem entsprechenden Isothiuroniumsalz und einer Verbindung der Formel III unter Phasentransferkatalyse-Bedingungen erhalten werden können.

Die Erfindung betrifft daher ein Verfahren zur Herstellung von Cyclopropanderivaten der Formel I,

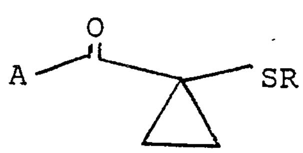

(I),

worin bedeuten:

A = t-Butyl, Phenyl, Biphenylyl, Phenoxyphenyl, Benzylphenyl, Benzyloxyphenyl, Phenylthiophenyl,

Phenylsulfinylphenyl, Phenylsulfonylphenyl, Naphthyl, 1,2,3,4-tetrahydronaphthyl, Indanyl, Fluorenyl, Thienyl, Furyl, Pyridyl, Isoxazolyl, Pyrazolyl, Benzofuryl, Benzothienyl,
wobei die genannten Ringsysteme unsubstituiert oder mit 1-3 Substituenten, die gleich oder verschieden sind, substituiert sind, welche F, Cl, Br, J, ($C_1$-$C_8$)-Alkyl, geradkettig oder verzweigt und unsubstituiert oder mit 1-9 F- oder Cl-Atomen substituiert, ($C_3$-$C_{10}$)-Cycloalkyl (mono-, bi- oder multicyclisch, z.B. Adamantyl, Norbornyl, Dekahydronaphthalinyl), ($C_1$-$C_8$)-Alkoxy, geradkettig oder verzweigt, und unsubstituiert oder mit 1-9 F- oder Cl-Atomen substituiert, ($C_3$-$C_8$)-Cycloalkyl-($C_1$-$C_4$)-Alkyl, ($C_1$-$C_8$)-Alkylthio, ($C_1$-$C_8$)-Alkylsulfinyl-und -sulfonyl, $NO_2$, CN sind;

R = ($C_1$-$C_{12}$)-Alkyl (geradkettig oder verzweigt, unsubstituiert oder durch 1 bis 3 F-, Cl- oder Br-Atome oder $CH_3$-Gruppen substituiert), ($C_2$-$C_{20}$)-Alkenyl (geradkettig oder verzweigt; ein- oder mehrfach ungesättigt, in Form der reinen e- oder z-Isomeren oder der e/z-Diastereomerengemische, unsubstituiert oder durch 1 bis 3 F-, Cl-oder Br-Atome oder $CH_3O$-Gruppen substituiert), ($C_2$-$C_{20}$)-Alkinyl (geradkettig oder verzweigt; unsubstituiert oder durch 1 bis 3 F-, Cl- oder Br-Atome oder $CH_3O$-Gruppen substituiert), ($C_4$-$C_{20}$)-Alkeninyl (geradkettig oder verzweigt; ein- oder mehrfach ungesättigt, in Form der reinen e- oder z-Isomeren oder der e/z-Diastereomerengemische, unsubstituiert oder durch 1 bis 3 F-, Cl- oder Br-Atome oder $CH_3O$-Gruppen substituiert), ($C_3$-$C_8$)-Cycloalkyl, ($C_3$-$C_8$)-Cycloalkyl-($C_1$-$C_4$)-alkyl, Phenyl, Phenyl-($C_1$-$C_4$)-alkyl, Biphenylyl, Phenoxyphenyl, Phenylthiophenyl, Phenyl-($C_1$-$C_2$)-alkyl, Naphthyl, Biphenylyl-($C_1$-$C_4$)-alkyl, Phenylthiophenyl-($C_1$-$C_4$)-alkyl, Phenoxyphenyl- ($C_1$-$C_4$)- alkyl, Naphthyl- ($C_1$-$C_4$)-alkyl, Benzothiazol-2-yl, Benzimidazol-2-yl, N-($C_1$-$C_4$)-Alkylbenzimidazol-2-yl, Pyridyl, Pyrid-2-yl-methyl, Pyrid-3-yl-methyl, Pyrid-4-yl-methyl, Pyrimidin-2-yl, Pyrimidin-2-yl-methyl, Pyrimidin-4-yl-methyl, Pyrimidin-5-yl-methyl, Furfuryl, Thien-2-yl, Thien-3-yl, Thien-2-yl-methyl, Thien-3-yl-methyl, Isoxazol-3-yl-methyl, Isoxazol-4-yl-methyl, Isoxazol-5-yl-methyl, Oxazolyl-methyl, Thiazol-2-yl-methyl, Thiazol-5-yl-methyl, Thiazol-5-yl-eth-2-yl, ($C_2$-$C_3$)-Alkyl-Y-aryl (mit Y gleich S, O, SO, $SO_2$) und Aryl gleich Phenyl, Benzyl, Thien-2-yl-methyl, Thien-3-yl-methyl), Benzothiazol-2-yl-methyl, Chinolin-yl-methyl, Pyridyl-phenyl-methyl, wobei die genannten Ringsysteme unsubstituiert oder substituiert sind durch 1, 2 oder 3 Substituenten, die gleich oder verschieden sind und jeweils F, Cl, Br, J, $CF_3$, ($C_1$-$C_8$)-Alkyl, ($C_1$-$C_8$)-Alkoxy, Phenyl bedeuten, und Phenyl durch 1-3 Substituenten F, Cl, Br, $CF_3$, ($C_1$-$C_8$)-Alkyl, ($C_1$-$C_8$)-Alkoxy substituiert sein kann.

Bevorzugt ist die Herstellung von Verbindungen I, in denen die Substituenten folgende Bedeutung haben:

A = Phenyl, Biphenylyl, 1,2,3,4-Tetrahydronaphthyl, Thienyl, Indanyl, jeweils unsubstituiert oder im aromatischen Ring mit ein oder zwei Substituenten, die gleich oder verschieden sind und jeweils F, Cl, Br, $CF_3$, ($C_1$-$C_4$)-Alkyl oder ($C_1$-$C_4$)-Alkoxy bedeuten, substituiert sind

R = ($C_1$-$C_{15}$)-Alkyl, geradkettig oder verzweigt, ($C_2$-$C_{15}$)-Alkenyl, geradkettig oder verzweigt, ein- oder mehrfach ungesättigt, Phenyl, Biphenylyl, Phenoxyphenyl, Phenylthiophenyl, Benzyl, Naphthyl, Biphenylyl-($C_1$-$C_2$)-alkyl, Naphthyl-($C_1$-$C_2$)-alkyl, Benzothiazol-2-yl, Benzimidazol-2-yl, Furfuryl, Thien-2-yl-methyl, Thien -3-yl-methyl, Isoxazol-3-yl-methyl, Isoxazol-4-yl-methyl, Isoxazol-5-yl-methyl, Oxazolyl-methyl, Pyrid-3-yl-methyl, Pyrid-4-yl-methyl, Ethyl-thio-aryl mit Aryl gleich Phenyl, Benzyl, Thien-2-yl-methyl, Thien-3-yl-methyl, wobei die genannten Ringsysteme unsubstituiert oder durch 1, 2 oder 3 Substituenten, die gleich oder verschieden sind und jeweils F, Cl, Br, $CF_3$, Methyl, Methoxy-Gruppen bedeuten, substituiert sind.

Ganz besonders bevorzugt ist ein Verfahren zur Herstellung von Verbindungen I, bei denen die Substituenten folgende Bedeutung haben:

A = Phenyl, Thienyl, jeweils unsubstituiert oder substituiert durch 1 oder 2 F- oder Cl-Atome, Methyl, Methoxy

R = ($C_1$-$C_{12}$)-Alkyl (geradkettig oder verzweigt), Geranyl, Neryl, Phenyl, Benzyl, Naphthyl, Thien-2-yl-methyl, Thien-3-yl-methyl, Isoxazol-4-yl-methyl, Pyrid-3-yl-methyl, Pyrid-4-yl-methyl, jeweils unsubstituiert oder 1- oder 2-fach substituiert durch F, Cl, Methyl, Methoxy.

Die als Substituenten oder in Zusammenhang mit anderen Substituenten auftretenden ($C_1$-$C_{12}$)-, bzw. ($C_1$-$C_4$)-Alkylgruppen können unverzweigt oder verzweigt sein und beispielsweise die Methyl-, Ethyl-, Propyl-, 1-Methylethyl-, Butyl-, 2-Methylpropyl-, 1,1-Dimethyl-ethyl-, Pentyl-, Hexyl-, Heptyl-, Oktyl-, Nonyl-, Decyl-, Undecyl-, Dodecylgruppe bedeuten; die durch Fluor oder Chlor substituierten Alkylgruppen können beispielsweise die Trifluormethyl-, Trichlormethyl-, 1,1,2,2-Tetrafluorethyl- oder die Nonafluorbutylgruppe bedeuten;
die ($C_3$-$C_8$)-Cycloalkylgruppen können die Cyclopropyl-, Cyclobutyl, Cyclopentyl-, Cyclohexyl-, Cycloheptyl- oder Cyclooctyl-Gruppe bedeuten;

die ($C_3$-$C_8$)-Cycloalkyl-($C_1$-$C_4$)-alkylgruppen können beispielsweise die Cyclopropylmethyl-, Cyclobutyl-, Cyclopentylmethyl-, Cyclohexylmethyl-, Cyclohexylethyl-, Cycloheptylmethyl- oder Cyclooctylmethyl-Gruppe bedeuten.

Das erfindungsgemäße Verfahren ist dadurch gekennzeichnet, daß man eine Verbindung der Formel III,

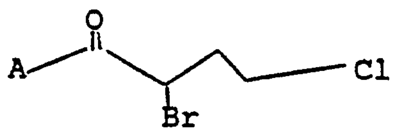

(III)

in der A die oben angegebene Bedeutung besitzt, mit einer Verbindung der Formel IV .

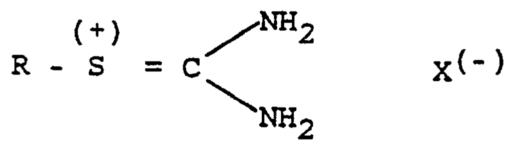

(IV)

zu Verbindungen der Formel I umsetzt, wobei R die oben angegebene Bedeutung besitzt, X für Fluor, Chlor, Brom oder Iod sowie Sulfat steht und im Falle von Sulfat als Gegenion ein- oder zweiwertige Salze möglich sind. Im Falle der einwertigen Salze können als weitere Kationen beispielsweise Alkali- oder Erdalkali-Kationen in Betracht kommen.

Die Herstellung von Verbindungen der Formel IV erfolgt nach literaturbekannten Verfahren, vorteilhaft durch Reaktion eines entsprechenden Halogenids oder Sulfats der Formel V

$$R - X \qquad (V)$$

mit Thioharnstoff mit R und X wie oben angegeben, in einem inerten Lösungsmittel, wie niederen Alkoholen, wie Methanol, Ethanol oder Isopropanol, Kohlenwasserstoffen wie Benzol, Toluol oder halogenierten Kohlenwasserstoffen, wie Dichlormethan, Chloroform bei Temperaturen von -10° bis 150° C, vorzugsweise 10° bis 80° C.

Die in vielen Fällen durch Kristallisation erhaltenen Verbindungen der Formel IV werden bei dem erfindungsgemäßen Verfahren ohne weitere Reinigungsschritte unter starkem Rühren mit Verbindung III unter Phasentransferkatalysebedingungen umgesetzt.

Vorteilhaft arbeitet man hierbei in einem Zweiphasensystem, wobei neben einer wäßrigen stark basischen Alkali- oder Erdalkalihydroxid-Lösung mit mindestens 2 Äquivalenten Base die organische Phase ein inertes Lösungsmittel, wie THF, Diethylether, Acetonitril, ein Kohlenwasserstoff wie Pentan oder Hexan, ein halogenierter Kohlenwasserstoff, wie Dichlormethan, Chloroform, Tetrachlorkohlenstoff, ein aromatischer Kohlenwasserstoff wie Benzol, Chlorbenzol, Nitrobenzol, Toluol oder Xylol oder Mischungen dieser Lösungsmittel, ist.

Als Phasentransferkatalysatoren sind guaternäre Ammonium- oder Phosphoniumsalze sowie Kronenether oder Polyethylenglykole geeignet. Beispiele solcher Verbindungen finden sich zusammengestellt in der Monographie von W.P. Weber und G.W. Gockel, Phase Transfer Catalysis in Organic Synthesis, Berlin, Springer Verlag, 1977. Als besonders geeignet für das die Erfindung betreffende Verfahren erwiesen sich Tetra-n-butylammoniumbromid sowie Benzyltriethylammoniumchlorid.

Die die Erfindung betreffende Umsetzung erfolgt in einem Temperaturbereich von -10° bis 150° C unter den Bedingungen einer phasentransfer-katalysierten Reaktion. Vorzugsweise werden die Reaktionspartner nebst Katalysator bei Temperaturen von 10° bis 80° C stark gerührt, wobei nach kurzer Zeit das Anspringen der Reaktion durch einen Anstieg der Reaktionstemperatur um 1° bis 40° C und Verfärbung der Reaktionsmischung beobachtet wird.

Vorteilhaft erweist sich neben einer Abkürzung der Reaktionssequenz und Zeitersparnis die Vermeidung der geruchsbelästigenden Mercaptan-Zwischenstufe. Weiterhin läßt sich durch dieses Verfahren die Reaktionsausbeute bei einigen Derivaten , bei denen das freie Mercaptid-Salz unter den Reaktionsbedingungen

zu Nebenreaktionen neigt, erhöhen (siehe Beispiel 3).

Die nachfolgenden Beispiele dienen der näheren Erläuterung der Erfindung.

Beispiel 1

Darstellung von 1-(4-Chlorbenzoyl)-1-(pyrid-4-yl-methylthio)-cyclopropan

Unter leichter Kühlung werden 250 ml Toluol, 70g 50 %ige wäßrige NaOH-Lösung, 16 g (67 mmol) Pyrid-4-yl-methylisothiuroniumchlorid und 1.5 g Tetrabutyl-ammoniumbromid unter starkem Rühren miteinander vermengt und anschließend rasch mit 19.7 g (67 mmol) 1-Brom-3-chlor-propyl-(4-chlorophenyl )keton versetzt. Nach 1/2 Stunde wurde die Kühlung entfernt und das Reaktionsgemisch noch 2 Stunden bei 20 °C gerührt.

Zur Aufarbeitung wird mit 250 ml Diethylether und 100 ml Wasser versetzt und die organische Phase abgetrennt. Die wäßrige Phase wird noch zweimal mit Diethylether extrahiert und die vereinigte organische Phase mit Wasser neutralgewaschen. Nach Trocknen mittels $Na_2SO_4$ wird i.Vac. eingeengt und der ölige Rückstand über Kieselgel (Laufmittel $CH_2Cl_2$ : Ethylacetat= 1:1) chromatographiert.

Ausbeute: 19.77g (Öl, 97 %; 65 mmol); farbloses Öl

Beispiel 2

Darstellung von 1-(4-Chlorbenzoyl)-1-(3,5-dimethyl-isoxazol-4-yl-methyl)-cyclopropan

250 ml Toluol, 30 g 50 %ige wäßrige NaOH, 1 g Triethylbenzylammoniumchlorid und 7.8 g (35 mmol) 3, 5-Dimethylisoxazolyl-4-yl-methyl-isothiuroniumchlorid werden unter Rühren bei Zimmertemperatur miteinander vermengt und unter kräftigem Rühren mit 10.4 g (35 mmol) 1-Brom-3-chlorpropyl-(4-chlorphenyl)-keton versetzt. Nach kurzer Zeit springt die Reaktion an (Dunkelfärbung der Reaktionsmischung und die Reaktionstemperatur steigt auf 40 °C). Nachdem die Reaktionstemperatur wieder auf Zimmertemperatur abgesunken ist (nach ca. 4 Stunden) wird auf 500 ml Wasser gegossen und mit Dichlormethan extrahiert. Nach Neutralwaschen der organischen Phase, Trocknen über $Na_2SO_4$ und Einengen i. Vac. wird über Kieselgel (Laufmittel Dichlormethan) chromatographiert.

Ausbeute: 9.39 g (29.1 mmol; 83 % d. Th.); farbloses Öl

Beispiel 3

Darstellung von 1-(4-Chlorbenzoyl)-1-(4-chlorphenyl-thio-ethyl-thio)-cyclopropan

Zu 250 ml Toluol werden 50 g 50 %ige wäßrige KOH und 1.5 g Tetra-n-butyl-ammonium-bromid nacheinander unter Eiskühlung 12.5 g (44 mmol) 4-Chlorphenyl-thio-ethylisothiuroniumchlorid und 13 g (44 mmol) 1-Brom-3-chlorpropyl-(4-chlorphenyl)-keton gegeben. Nach Entfernen der Kühlung sprang die Reaktion an und die Reaktionstemperatur sprang auf 42 °C. Nach Beendigung der Reaktion - erkennbar am Absinken der Reaktionstemperatur auf Zimmertemperatur - wird auf Wasser gegossen, mit Dichlormethan extrahiert, die organische Phase über $Na_2SO_4$ getrocknet und i. Vac. eingeengt. Das verbleibende Öl wird über Kieselgel chromatographiert (Laufmittel Dichlormethan:Ethylacetat = 1:1).

Ausbeute: 14.5 g = 38 mmol; 86 % d. Th. ; farblose Kristalle vom Schmelzpunkt 63 - 66 °C

Auf analoge Weise wurden die in der folgenden Tabelle aufgeführten Verbindungen hergestellt. Die Verbindungen sind i.a. Öle und wurden mittels $^1H$-NMR-Spektroskopie und/oder Elementaranalyse charakterisiert. Weitere Charakterisierung erfolge dadurch, daß die Verbindungen zu den entsprechenden Cyclopropylazolen der Formel II mit Triazol- oder Imidazolrest umgesetzt wurden, deren Synthese und Charakterisierung in Patent EP-OS 0 237 917 beschrieben wird.

Tabelle: Hergestellte Verbindungen der Strukturformel I

| Nr. | A | R | Katalysator | Ausbeute |
|---|---|---|---|---|
| 4 | $C_6H_4$-4-Cl | $CH_2$-pyrid-3-yl | $Bu_4NBr$ | 91 % |
| 5 | $C_6H_4$-4-Cl | $CH_2$-CH=C$(CH_3)_2$ | $Bu_4NBr$ | 50 % |
| 6 | $C_6H_4$-4-Cl | $CH_2$-2,3-$Cl_2$-thien-5-yl | $Bu_4NBr$ | 58 % |
| 7 | $C_6H_4$-4-Cl | $CH_2$-3-Cl-thien-2-yl | $BzEt_3NCl$ | 73 % |
| 8 | $C_6H_4$-4-Cl | $CH_2$-5-Cl-thien-2-yl | $Bu_4NBr$ | 68 % |
| 9 | $C_6H_4$-4-Cl | E-3,7-$Me_2$-2,6-octadien-1-yl | $Bu_4NBr$ | 57 % |
| 10 | $C_6H_4$-4-Cl | $CH_2$-thienyl | $Bu_4NBr$ | 73 % |
| 11 | $C_6H_4$-4-Cl | $CH_2$-5-Br-thien-2-yl | $Bu_4NBr$ | 56 % |
| 12 | $C_6H_4$-4-Cl | $CH_2$-2,5-$Cl_2$-thien-3-yl | $Bu_4NBr$ | 85 % |
| 13 | $C_6H_4$-4-Cl | $CH_2$-$CH_2$-S-benzyl | $Bu_4NBr$ | 40 % |
| 14 | $C_6H_4$-4-Cl | $CH_2$-thien-3-yl | $BzEt_3NCl$ | 40 % |
| 15 | $C_6H_4$-4-Cl | $CH_2$-$CH_2$-4-Me-thiazol-5-yl | $Bu_4NBr$ | 30 % |
| 16 | $C_6H_4$-4-Cl | $CH_2$-pyrid-2-yl | $Bu_4NBr$ | 95 % |
| 17 | $C_6H_4$-4-F | $CH_2$-5-Cl-thien-2-yl | $Bu_4NBr$ | 70 % |
| 18 | $C_6H_4$-4-F | $CH_2$-2,5-$Cl_2$-thien-3-yl | $Bu_4NBr$ | 74 % |
| 19 | $C_6H_4$-4-F | $CH_2$-$CH_2$-S-$CH_2$-$C_6H_5$ | $Bu_4NBr$ | 61 % |
| 20 | $C_6H_4$-4-F | $CH_2$-pyrid-4-yl | $BzEt_3NCl$ | 85 % |
| 21 | $C_6H_4$-4-Cl | $CH_2$-5-Br-furan-2-yl | $Bu_4NBr$ | 41 % |
| 22 | $C_6H_4$-4-Cl | Z-3,7-$CH_3$-2,6-octadien-1-yl | $Bu_4NBr$ | 52 % |
| 23 | $C_6H_4$-4-F | Z-3,7-$CH_3$-2,6-octadien-1-yl | $Bu_4NBr$ | 53 % |
| 24 | $C_6$H4-4-F | $CH_2$-thien-2-yl | $Bu_4NBr$ | 96 % |
| 25 | Indan-2-yl | $CH_2$-thie-2-yl | $BzEt_3NCl$ | 86 % |
| 26 | Tetralin-2-yl | $CH_2$-thien-2-yl | $Bu_4NBr$ | 87 % |
| 28 | $C_6H_4$-4-t-$C_4H_9$ | $CH_2$-thien-2-yl | $Bu_4NBr$ | 75 % |
| 29 | $C_6H_4$-4-$CH_3$ | $CH_2$-3-Cl-thien-2-yl | $BzEt_3NCl$ | 90 % |
| 30 | Indan-2-yl | $CH_2$-3-Cl-thien-2-yl | $Bu_4NBr$ | 90 % |
| 31 | Indan-2-yl | $CH_2$-2,5-$Cl_2$-thien-3-yl | $Bu_4NBr$ | 95 % |
| 31 | $C_6H_4$-4-F | $CH_2$-3-Cl-thien-2-yl | $BzEt_3NCl$ | 35 % |
| 32 | $C_6H_4$-4-Cl | $CH_2$-$CH_2$-S-(4-Cl-benzyl) | $Bu_4NBr$ | 35 % |
| 33 | $C_6H_4$-4-$OCH_3$ | $CH_2$-pyrid-4-yl | $Bu_4NBr$ | 87 % |
| 34 | $C_6H_4$-4-Cl | $CH_2$-chinolin-3-yl | $Bu_4NBr$ | 59 % |
| 35 | $C_6H_4$-4-F | $CH_2$-$CH_2$-S-(4-Cl-benzyl) | $Bu_4NBr$ | 38 % |
| 36 | $C_6H_4$-4-F | E-3,7-$Me_2$-2,6-octadien-1-yl | $Bu_4NBr$ | 83 % |

Fortsetzung Tabelle

| Nr. | A | R | Katalysator | Ausbeute |
|---|---|---|---|---|
| 37 | $C_6H_4$-4-Cl | $CH_2$-2-Br-pyriyd-4-yl | $Bu_4NBr$ | 48 % |
| 38 | $C_6H_4$-4-Cl | $CH_2$-$C_6H_4$-4-pyrid-2-yl | $Bu_4NBr$ | 58 % |
| 39 | $C_6H_3$-2,4-$F_2$ | $CH_2$-pyrid-3-yl | $Bu_4NBr$ | 51 % |
| 40 | $C_6H_4$-4-Cl | $CH_2$-(3-$CH_3$-isoxazol-5-yl) | $Bu_4NBr$ | 96 % |
| 41 | $C_6H_4$-4-Cl | $CH_2$-(5-pyrid-2-yl)-thien-2-yl | $Bu_4NBr$ | 48 % |
| 42 | $C_6H_3$-2,4-$F_2$ | $CH_2$-pyrid-4-yl | $Bu_4NBr$ | 59 % |
| 43 | $C_6H_3$-2,4-$F_2$ | $CH_3$ | $Bu_4NBr$ | 40 % |
| 44 | $C_6H_4$-4-Cl | $CH_2$-(2-phenyl)-pyrimidin-5-yl | $Bu_4NBr$ | 81 % |
| 45 | $C_6H_4$-2-Cl-4-F | $CH_2$-pyrid-4-yl | $Bu_4NBr$ | 90 % |
| 46 | $C_6H_4$-4-Cl | $CH_2$-(3,5-$(CH_3)_2$-isoxazol-4-yl | $Bu_4NBr$ | 90 % |
| 47 | $C_6H_4$-4-Cl | $CH_2$-(5-$CH_3$-isoxazol-3-yl) | $Bu_4NBr$ | 89 % |
| 48 | $C_6H_4$-4-Cl | $CH_2$(3-ethyl-5-methyl-isoxazol-4-yl) | $Bu_4NBr$ | 82 % |
| 49 | $C_6H_4$-4-Cl | $CH_2$(5-methyl-3-(3-chlorphenyl)-isoxazol-4-yl) | $Bu_4NBr$ | 67 % |
| 50 | $C_6H_4$-4-Cl | $CH_2$-(3-heptyl-isoxazol-5-yl) | $Bu_4NBr$ | 73 % |
| 51 | $C_6H_4$-4-Cyclohexyl | $CH_2$-3,4-$(CH_3)_2$-$C_6H_3$ | $Bu_4NBr$ | 48 % |
| 52 | $C_6H_4$-4-Cyclohexyl | $CH_2$-pyrid-4-yl | $Bu_4NBr$ | 64 % |
| 53 | $C_6H_4$-4-Cyclohexyl | $CH_2$-(4-$CF_3$-$C_6H_4$) | $Bu_4NBr$ | 66 % |
| 54 | $C_6H_4$-4-n-$C_7H_{15}$ | $CH_2$-(3-$CF_3$-$C_6H_4$) | $Bu_4NBr$ | 91 % |
| 55 | $C_6H_4$-4-$CH_3$ | $CH_2$-(3-$CF_3$-$C_6H_4$) | $Bu_4NBr$ | 60 % |
| 56 | $C_6H_4$-4-t-butyl | $CH_2$-(3-$CF_3$-$C_6H_4$) | $Bu_4NBr$ | 92 % |
| 57 | $C_6H_4$-4-Cyclohexyl | $CH_2$-(3-$CF_3$-$C_6H_4$) | $Bu_4NBr$ | 62 % |
| 58 | $C_6H_4$-4-Cl | $CH_2$-$C_6H_4$-4-t-butyl | $Bu_4NBr$ | 56 % |
| 59 | $C_6H_4$-4-t-butyl | $CH_2$-(3,4-$(CH_3)_2$-isoxazol-4-yl | $Bu_4NBr$ | 92 % |
| 60 | $C_6H_4$-4-Cyclohexyl | $CH_2$-$C_6H_4$-4-t-butyl | $Bu_4NBr$ | 60 % |
| 61 | $C_6H_4$-4-t-butyl | $CH_2$-$C_6H_4$-4-t-butyl | $Bu_4NBr$ | 75 % |
| 62 | $C_6H_4$-4-Cl | $CH_2$-$C_6H_4$-3-$CF_3$ | $Bu_4NBr$ | 79 % |

Fortsetzung Tabelle

| Nr. | A | R | Katalysator | Ausbeute |
|---|---|---|---|---|
| 63 | $C_6H_4$-4-adamant-2-yl | $CH_2$-(3-$CF_3$-$C_6H_4$) | $Bu_4NBr$ | 77 % |
| 64 | $C_6H_4$-4-adamant-2-yl | $CH_2$-(4-Cl-$C_6H_4$) | $Bu_4NBr$ | 56 % |

Mit Ausnahme von Verbindung 43 sind alle Verbindungen in Tabelle 1 aus den entsprechen Isothiuroniumchloriden bzw. -bromiden synthetisiert worden. Bei der Darstellung von 43 fand das entsprechende Sulfat Anwendung.

**Ansprüche**

**1.** Verfahren zum Herstellen von Cyclopropanderivaten der Formel I,

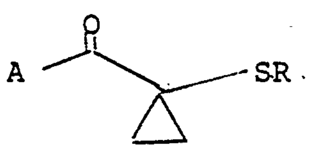

(I),

worin bedeuten:

A = t-Butyl, Phenyl, Biphenylyl, Phenoxyphenyl, Benzylphenyl, Benzyloxyphenyl, Phenylthiophenyl, Phenylsulfinylphenyl, Phenylsulfonylphenyl, Naphthyl, 1,2,3,4-tetrahydronaphthyl, Indanyl, Fluorenyl, Thienyl, Furyl, Pyridyl, Isoxazolyl, Pyrazolyl, Benzofuryl, Benzothienyl, wobei die genannten Ringsysteme unsubstituiert oder mit 1-3 Substituenten, die gleich oder verschieden sind, substituiert sind, welche F, Cl, Br, J, ($C_1$-$C_8$)-Alkyl, geradkettig oder verzweigt und unsubstituiert oder mit 1-9 F- oder Cl-Atomen substituiert, ($C_3$-$C_{10}$)-Cycloalkyl (mono-, bi- oder multicyclisch), ($C_1$-$C_8$)-Alkoxy, geradkettig oder verzweigt, und unsubstituiert oder mit 1-9 F- oder Cl-Atomen substituiert, ($C_3$-$C_8$)-Cycloalkyl - ($C_1$-$C_4$)-Alkyl, ($C_1$-$C_8$)-Alkylthio, ($C_1$-$C_8$)-Alkylsulfinyl- und -sulfonyl, $NO_2$, CN sind;

R = ($C_1$-$C_{12}$)-Alkyl (geradkettig oder verzweigt, unsubstituiert oder durch 1 bis 3 F-, Cl- oder Br-Atome oder $CH_3$-Gruppen substituiert), ($C_2$-$C_{20}$)-Alkenyl (geradkettig oder verzweigt; ein- oder mehrfach ungesättigt, in Form der reinen e- oder z-Isomeren oder der e/z-Diastereomerengemische, unsubstituiert oder. durch 1 bis 3 F-, Cl- oder Br-Atome oder $CH_3O$-Gruppen substituiert), ($C_2$-$C_{20}$)-Alkinyl (geradkettig oder verzweigt; unsubstituiert oder durch 1 bis 3 F-, Cl-oder Br-Atome oder $CH_3O$-Gruppen substituiert), ($C_4$-$c_{20}$)-Alkeninyl (geradkettig oder verzweigt; ein- oder mehrfach ungesättigt, in Form der reinen e- oder z-Isomeren oder der e/z-Diastereomerengemische, unsubstituiert oder durch 1 bis 3 F-, Cl- oder Br-Atome oder $CH_3O$-Gruppen substituiert), ($C_3$-$C_8$)-Cycloalkyl, ($C_3$-$C_8$)-Cycloalkyl-($C_1$-$C_4$)-alkyl, Phenyl, Phenyl- ($C_1$- $C_4$)-alkyl, Biphenylyl, Phenoxyphenyl, Phenylthiophenyl, Phenyl- ($C_1$-$C_2$)-alkyl, Naphthyl, Biphenylyl-($C_1$-$C_4$)alkyl, Phenylthiophenyl-($C_1$-$C_4$)-alkyl, Phenoxyphenyl-($C_1$-$C_4$)-alkyl, Naphthyl-($C_1$-$C_4$)-alkyl, Benzothiazol-2-yl, Benzimidazol-2-yl, N-($C_1$-$C_4$)-Alkylbenzimidazol-2-yl, Pyridyl, Pyrid-2-yl-methyl, Pyrid-3-yl-methyl, Pyrid-4-yl-methyl, Pyrimidin-2-yl, Pyrimidin-2-yl-methyl, Pyrimidin-4-yl-methyl, Pyrimidin-5-yl-methyl,

Furfuryl, Thien-2-yl, Thien-3-yl, Thien-2-yl-methyl, Thien-3-yl-methyl, Isoxazol-3-yl-methyl Isoxazol-4-yl-methyl, Isoxazol-5-yl-methyl, Oxazolylmethyl, Thiazol-2-yl-methyl, Thiazol-5-yl-methyl, Thiazol-5-yl-eth-2-yl, $(C_2-C_3)$-Alkyl-Y-aryl (mit Y gleich S, O, SO, $SO_2$) und Aryl gleich Phenyl, Benzyl, Thien-2-yl-methyl, Thien-3-yl-methyl), Benzothiazol-2-yl-methyl, Chinolin-yl-methyl, Pyridyl-phenyl-methyl, wobei die genannten Ringsysteme unsubstituiert oder substituiert sind durch 1, 2 oder 3 Substituenten, die gleich oder verschieden sind und jeweils F, Cl, Br, J, $CF_3$, $(C_1-C_8)$-Alkyl, $(C_1-C_8)$-Alkoxy, Phenyl bedeuten, und Phenyl durch 1-3 Substituenten F, Cl, Br, $CF_3$, $(C_1-C_8)$-Alkyl, $(C_1-C_8)$-Alkoxy substituiert sein kann,

dadurch gekennzeichnet, daß man eine Verbindung der Formel III,

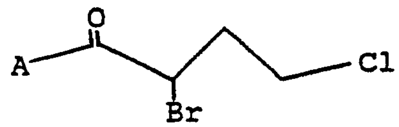

(III)

in der A die oben angegebene Bedeutung besitzt, mit einer Verbindung der Formel IV

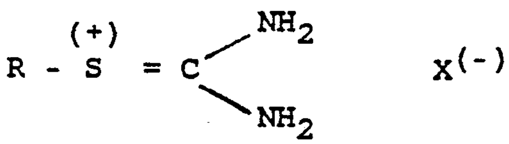

(IV)

zu Verbindungwen der Formel I umsetzt, wobei R die oben angegebene Bedeutung besitzt, X für Fluor, Chlor, Brom oder Iod sowie Sulfat steht.

**2.** Verfahren nach Anspruch 1, dadurch gekennzeichnet, daß man Verbindungen III einsetzt, in denen die Substituenten folgende Bedeutung haben:

A = Phenyl, Biphenylyl, 1,2,3,4-Tetrahydronaphthyl, Thienyl, Indanyl, jeweils unsubstituiert oder im aromatischen Ring mit ein oder zwei Substituenten, die gleich oder verschieden sind und jeweils F, Cl, Br, $CF_3$, $(C_1-C_4)$-Alkyl oder $(C_1-C_4)$-Alkoxy bedeuten, substituiert sind

R = $(C_1-C_{15})$-Alkyl, geradkettig oder verzweigt, $(C_2-C_{15})$-Alkenyl, geradkettig oder verzweigt, ein- oder mehrfach ungesättigt, Phenyl, Biphenylyl, Phenoxyphenyl, Phenylthiophenyl, Benzyl, Naphthyl, Biphenylyl-$(C_1-C_2)$-alkyl, Naphthyl-$(C_1-C_2)$-alkyl, Benzothiazol-2-yl, Benzimidazol-2-yl, Furfuryl, Thien-2-yl-methyl, Thien -3-yl-methyl, Isoxazol-3-yl-methyl, Isoxazol-4-yl-methyl, Isoxazol-5-yl-methyl, Oxazolyl-methyl, Pyrid-3-yl-methyl, Pyrid-4-yl-methyl, Ethyl-thio-aryl mit Aryl gleich Phenyl, Benzyl, Thien-2-yl-methyl, Thien-3-yl-methyl, wobei die genannten Ringsysteme unsubstituiert oder durch 1, 2 oder 3 Substituenten, die gleich oder verschieden sind und jeweils F, Cl, Br, $CF_3$, Methyl, Methoxy-Gruppen bedeuten, substituiert sind.

**3.** Verfahren nach Anspruch 1, dadurch gekennzeichnet, daß man Verbindungen III einsetzt, in denen

A = Phenyl, Thienyl, jeweils unsubstituiert oder substituiert durch 1 oder 2 F- oder Cl-Atome, Methyl, Methoxy
und

R = $(C_1-C_{12})$-Alkyl (geradkettig oder verzweigt), Geranyl, Neryl, Phenyl, Benzyl, Naphthyl, Thien-2-yl-methyl, Thien-3-yl-methyl, Isoxazol-4-yl-methyl, Pyrid-3-yl-methyl, Pyrid-4-yl-methyl, jeweils unsubstituiert oder 1- oder 2-fach substituiert durch F, Cl, Methyl, Methoxy

sind.